# FASCICULE DE BREVET EUROPEEN

(11) **EP 3 619 417 B1**
(45) Date de publication et mention de la délivrance du brevet: **18.10.2023**
(21) Numéro de dépôt: 18726514.5
(22) Date de dépôt: 02.05.2018
(51) Int. Cl.: F02K 3/06, F02C 7/36

(54) **TURBOMACHINE À ROTOR DE SOUFFLANTE ET RÉDUCTEUR ENTRAÎNANT UN ARBRE DE COMPRESSEUR BASSE PRESSION**
TURBOMASCHINE MIT GEBLÄSEROTOR UND REDUKTIONSGETRIEBE ZUM ANTRIEB EINER NIEDERDRUCKDEKOMPRESSORWELLE
TURBOMACHINE WITH FAN ROTOR AND REDUCTION GEARBOX DRIVING A LOW-PRESSURE COMPRESSOR SHAFT

(30) Priorité: 02.05.2017 FR 1753856
(43) Date de publication de la demande: 11.03.2020
(73) Titulaire: Safran Aircraft Engines, 75015 Paris (FR)
(72) Inventeur: LEMARCHAND, Kevin Morgane, 77550 Moissy-Cramayel (FR); CHARIER, Gilles Alain Marie, 77550 Moissy-Cramayel (FR); NOWAKOWSKI, Nathalie, 77550 Moissy-Cramayel (FR); TANTOT, Nicolas Jérôme Jean, 77550 Moissy-Cramayel (FR); DUBOSC, Matthieu Pierre Michel, 77550 Moissy-Cramayel (FR); MAYHEW, Dominique Gerhardt, 77550 Moissy-Cramayel (FR)
(74) Mandataire: Regimbeau
(86) Numéro de dépôt international: PCT/FR2018/000107
(87) Numéro de publication internationale: WO 2018/202962

(56) Documents cités:
- WO-A1-2014/143248
- WO-A1-2014/143248
- WO-A2-2015/012923
- US-A1- 2014 255 188
- Mark D Guynn ET AL: "Refined Exploration of Turbofan Design Options for an Advanced Single-Aisle Transport", , 1 janvier 2011 (2011-01-01), pages 2011-216883, XP055114168, Extrait de l'Internet: URL:http://ntrs.nasa.gov/search.jsp?R=2011 0004165
- ZIMBRICK R A ET AL: "INVESTIGATION OF VERY HIGH BYPASS RATIO ENGINES FOR SUBSONIC TRANSPORTS", JOURNAL OF PROPULSION AND POWER, AMERICAN INSTITUTE OF AERONAUTICS AND ASTRONAUTICS. NEW YORK, US, vol. 6, no. 4, 1 juillet 1990 (1990-07-01) , pages 490-496, XP000136188, ISSN: 0748-4658

## Description

### DOMAINE TECHNIQUE GÉNÉRAL ET ART ANTÉRIEUR

La présente invention est relative au domaine des turbomachines.

La recherche de la minimisation des émissions polluantes liées au transport aérien passe notamment par la voie de l'amélioration de toutes les efficacités des systèmes de propulsion, et plus particulièrement du rendement propulsif qui caractérise l'efficacité avec laquelle l'énergie qui est communiquée à l'air qui traverse le moteur est convertie en effort de poussée utile.

Les éléments influençant au premier ordre ce rendement propulsif sont ceux liés aux parties basse pression du système propulsif, qui contribuent de manière immédiate à la génération de la poussée : turbine basse pression, système de transmission basse pression, rotor de soufflante et canal secondaire guidant l'écoulement de ce dernier.

Le principe directeur connu permettant d'améliorer le rendement propulsif consiste à diminuer le taux de compression de la soufflante, diminuant par là-même la vitesse d'écoulement en sortie du moteur et les pertes par énergie cinétique qui lui sont liées.

L'une des principales conséquences de cette diminution de vitesse d'écoulement en sortie du moteur est qu'il est nécessaire de faire traiter à la partie basse pression (flux secondaire) un débit massique d'air plus important afin d'assurer un niveau de poussée donnée, fixé par les caractéristiques de l'avion : ceci conduit donc à l'augmentation du taux de dilution du moteur.

Cette augmentation de débit secondaire a pour effet direct de nécessiter l'augmentation du diamètre de la soufflante, et par conséquent des dimensions externes du carter de rétention l'entourant, ainsi que de la nacelle constituant l'enveloppe aérodynamique du carter en question. Se pose alors avec de plus en plus d'acuité la question de la capacité à intégrer des systèmes propulsifs de dimensions de plus en plus importantes sous une aile d'avion, dans un contexte où la garde au sol est limitée.

Outre les aspects dimensionnels, l'augmentation du taux de dilution pénalise fortement la masse du système propulsif, via notamment une augmentation très significative de la masse du carter de soufflante, dimensionné pour la rétention centrifuge en cas d'éjection d'aubage.

Il est ainsi constaté que les taux de dilution les plus élevés, bien que synonymes des rendements propulsifs les meilleurs, s'accompagnent de pénalités de masse, de traînée et de difficultés d'installation sous aile tellement importantes que la majeure partie du gain ainsi espéré se retrouve éclipsée par ces éléments fortement pénalisants.

Une alternative à ce paradigme consiste à s'affranchir de la notion de carénage de la partie basse pression : l'architecture propulsive ainsi constituée porte le nom de turbopropulseur (cas d'un rotor basse pression unique non caréné, qualifié d'hélice), ou de « open rotor » selon la terminologie anglosaxonne couramment utilisée (cas de deux rotors basse pression contra rotatifs, qualifiés d'hélices contra rotatives). Cette architecture alternative, si elle permet de s'affranchir des contraintes de masse et de traînée de frottement du carénage de la partie secondaire désormais inexistant, pose toutefois d'autres problèmes : en premier lieu, l'absence de carénage rend le contexte de certification très différent vis-à-vis de l'éjection potentielle de pale du rotor basse pression, et nécessite la considération de technologies plus complexes sur le rotor (pale dite « fail safe » selon la terminologie anglosaxonne, par exemple) ; en second lieu, l'absence de carénage autour de la partie basse pression rend le fonctionnement aérodynamique de son rotor très sensible aux variations de conditions de vol (en particulier de vitesse), et limite la vitesse de vol maximale admissible par l'avion. Enfin, l'absence de carénage induit un débit spécifique beaucoup plus faible qu'une solution carénée, conduisant, pour un niveau de poussée donné, à des dimensions externes beaucoup plus importantes qu'une solution carénée, aggravant donc la difficulté d'installation sur la cellule avion sur le plan dimensionnel.

La suppression totale du carénage de la partie basse pression, si elle apparaît comme une option acceptable pour des aéronefs de dimensions modérées et volant à des vitesses faibles à moyennes (applications de type régional / court courrier), semble induire trop de désavantages pour une utilisation sur des classes de poussée supérieures (moyen - long courrier), pour lesquelles la capacité de vitesse de vol est une attente peu négociable des opérateurs.

On connait déjà par le document WO2014/143248 une structure de turbomachine à haut taux de dilution comprenant une soufflante, un arbre de turbine basse pression et un réducteur logé dans un carter entre la soufflante et l'arbre de turbine basse pression

Le diamètre du rotor de la soufflante est compris entre 80 et 110 pouces (soit entre 203,2 centimètres et 279,4 centimètres), tandis que le rapport de pression de la soufflante est compris entre 1.15 et 1.24.

Dans ce document, la turbomachine ne comprend pas de compresseur basse pression, distinct de la soufflante.

On connait par ailleurs par la demande WO2015/012923 une turbomachine comprenant une soufflante, un compresseur basse pression et un réducteur logé dans un carter entre la soufflante et le compresseur basse pression.

Ce document n'envisage toutefois aucunement des soufflantes à très faible rapport de pression.

En outre, la demande WO2015/012923, comme le document WO2014/143248, prévoient un carénage qui définit une entrée d'air et une tuyère secondaire en amont et en aval de la soufflante.

### PRÉSENTATION GÉNÉRALE DE L'INVENTION

Un but général de l'invention est de proposer une solution permettant de pallier les inconvénients des techniques de l'art antérieur.

Notamment un but de l'invention est de proposer une solution permettant d'assurer l'efficacité de la turbine basse pression couplée à un rotor de soufflante lent, à très faible rapport de pression.

En particulier, un but de l'invention est de proposer une architecture dans laquelle un réducteur est interposé au sein du moyeu de la soufflante entre un rotor de soufflante et un arbre de turbine basse pression :
- sans impacter de manière démesurée le rayon intérieur de la soufflante,
- tout en étant compatible avec le fonctionnement de ladite turbomachine dans toutes les conditions critiques, pour un rotor de soufflante lent et à très faible rapport de pression.

Un autre but de l'invention est de proposer une solution à rotor de soufflante caréné dans laquelle les impacts de masse et de trainée du carénage sont limités.

Notamment, un but de l'invention est de proposer une architecture qui permette un carénage assurant essentiellement une fonction de frontière aérodynamique autour du rotor de la soufflante, sans rôle de guidage de l'écoulement en amont de la soufflante (rôle généralement assuré par l'entrée d'air) et/ou sans rôle de contrôle du champ de pression en aval du rotor de la soufflante (rôle généralement assuré par une tuyère secondaire).

Egalement, un autre but est de proposer une solution avec un carénage assurant essentiellement une fonction de frontière aérodynamique qui permette la réalisation d'une fonction « reverse », malgré l'absence de portes ou grilles d'inversion de poussée en aval de la soufflante.

Un autre but encore de l'invention est de proposer une solution avec une émission acoustique limitée, alors même que les dimensions réduites du carénage rendent difficiles l'intégration physique de traitements acoustiques absorbants conventionnels.

Selon les caractéristiques de la revendication 1, l'invention propose une soufflante carénée, un arbre de turbine basse pression et un réducteur logé dans un carter du réducteur entre la soufflante et l'arbre de turbine basse pression, un rotor de soufflante alimentant en flux d'air une veine primaire et une veine secondaire et comportant un moyeu de diamètre D1, dans lequel
- le diamètre du rotor de soufflante est supérieur à 82 pouces (2,08 mètres),
- le rapport de pression de la soufflante est compris entre 1.10 et 1.35, et elle comporte un compresseur basse pression distinct de la soufflante, le réducteur étant interposé entre le rotor de soufflante et un arbre de turbine basse pression, et en ce que le carter du réducteur est de diamètre externe D2 supérieur au diamètre D1 du moyeu, le diamètre primitif de la couronne du réducteur étant compris entre 0,15 et 0,35 fois le diamètre du rotor de la soufflante.

Un tel réducteur permet d'assurer l'efficacité de la turbine basse pression.

Son dimensionnement et positionnement évitent un encombrement qui serait rédhibitoire.

Il permet une intégration compatible avec un rapport de moyeu permettant les couples mach/débit de la soufflante nécessaires.

Selon un autre aspect, la turbine comporte une nacelle compacte.

Plus particulièrement, la nacelle est un carénage de protection entourant le rotor de la soufflante, ledit carénage présentant une longueur limitée audit rotor de soufflante.

De cette façon, la nacelle est réduite à sa plus simple expression, le carénage ne lui conférant plus qu'une fonction de frontière aérodynamique autour du rotor de soufflante.

Il ne s'étend ni en amont, ni en aval dudit rotor et consiste en un carénage aérodynamique dimensionné pour assurer une protection contre l'éjection des pales.

La fonction de guidage de l'écoulement en amont du rotor de soufflante (rôle précédemment joué par l'entrée d'air) est supprimée.

Il en est également de même pour les fonctions de contrôle du champ de pression aval (rôle précédemment joué par la tuyère secondaire) et de réalisation de la fonction poussée inversée (rôle précédemment joué par un système spécifique intégré à la nacelle).

Par ailleurs, les pales sont avantageusement à calage variable.

Ceci permet un pilotage du point de fonctionnement de la soufflante selon les conditions de vol. On notera en effet que l'association d'une soufflante à très faible rapport de pression et de l'absence de tuyère secondaire (dont l'un des rôles clés est de piloter la position du point de fonctionnement du fan dans son champ) induit une forte variabilité des lignes de fonctionnement fan entre les conditions de basse altitude et de haute altitude ; potentiellement, cette situation induit une difficulté d'opérabilité (manque de marge au pompage) dans les conditions sol, et un dispositif de pilotage du point de fonctionnement du fan selon les conditions de vol se révèle nécessaire

Optionnellement, le calage variable peut être configuré pour permettre un fonctionnement en inversion de poussée.

L'inversion de poussée est alors réalisée par la rotation des pales sur leurs axes de calage.

On notera ici que plusieurs problématiques peuvent apparaitre lorsque l'on prévoit un calage variable pour les pales de la soufflante.

Habituellement, dans une turbomachine, la partie intérieure de veine décrit un arc de cercle passant par le sommet du cône sur l'axe de la turbomachine et se terminant à la fin du compresseur basse pression en passant par la soufflante.

La forme de la veine en pied de pales entraine l'apparition d'une marche importante quand le calage est modifié.

Une découpe classique de tête de pale complémentaire d'une veine cylindrique ou tronconique entraine, entre la tête de pale et le carénage, des jeux très importants, qui sont nécessaires pour permettre la variation de calage sans contact, mais qui entrainent une perte de rendement non négligeable.

Ces pertes de rendement, comme les bruits acoustiques qui en résultent, ne sont en particulier pas acceptables dans le cas de turbomachine à rotor de soufflante lent et à très faible rapport de pression.

Ainsi, selon un autre aspect encore, l'invention propose une turbomachine dans laquelle la veine définie entre le carénage et le moyeu est sensiblement cylindrique en pied de pale, l'angle de la pente du moyeu en pied de pale étant nul ou inférieur à 5°.

Egalement, le carénage présente un renfoncement annulaire sphérique en tête de pale, les têtes des pales étant de forme générale complémentaire (la découpe de la tête de pâle s'inscrivant sur une sphère légèrement plus petite que la sphère du carter).

Le jeu moyen (valeur moyenne du jeu le long de la tête de pâle) entre la paroi du renfoncement annulaire sphérique et une tête de pale adimensionné par la corde en tête de l'aubage est inférieur à 0,35% lorsque la turbomachine est à son régime maximal au sol. Il est inférieur à 0,65% en régime de croisière de la turbomachine.

Par jeu moyen, on entend ici la valeur moyenne du jeu le long de la tête de pâle.

On rappelle par ailleurs que la corde correspond à la longueur du profil, c'est-à-dire la distance la plus courte entre le bord d'attaque et le bord de fuite. Pour la corde en tête, c'est la distance entre l'extrémité en tête du bord d'attaque et l'extrémité en tête du bord de fuite.

Egalement, on définit le régime de croisière comme compris entre 85% et 100% du régime nominal de la turbomachine. La phase de croisière débute au sommet de montée de l'aéronef, et se termine au début de la phase de descente de l'aéronef.

### PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :
- la figure 1 est une représentation schématique en vue en coupe (demie-vue) illustrant l'intégration d'un réducteur de soufflante dans une turbomachine conforme à un mode de réalisation possible de l'invention ;
- la figure 2 illustre un exemple de configuration à tête de pale sphérique ;
- les figures 3a et 3b illustrent la définition d'une corde en tête de pâle, ainsi que les jeux entre une tête de pale et la paroi du carénage ;
- la figure 4 illustre une structure de maintien d'aube dans une alvéole au moyen d'une cale de maintien.

### DESCRIPTION D'UN OU PLUSIEURS MODES DE MISE EN ŒUVRE ET DE RÉALISATION

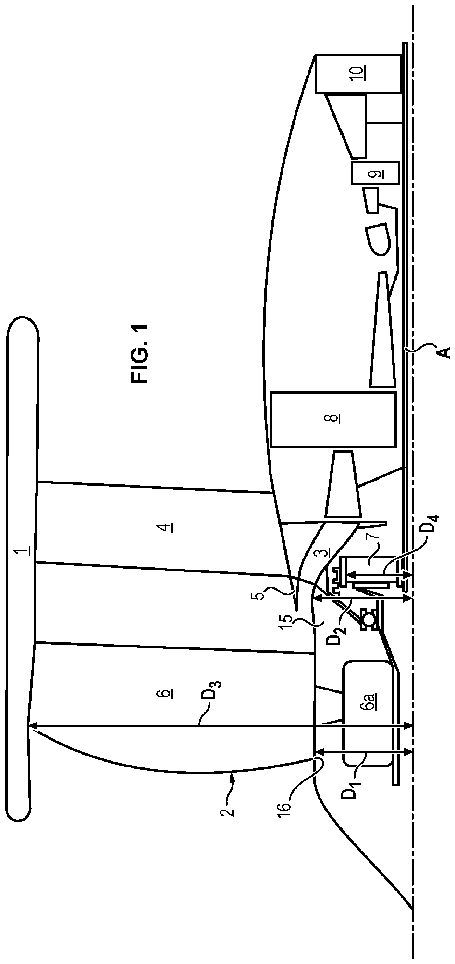

La turbomachine T illustrée sur la figure 1 présente une architecture à soufflante carénée à très haut taux de dilution (Architecture dite UHBR ou « Ultra High By-Pass Ratio » selon la terminologie anglosaxonne généralement utilisée).

Elle comporte une nacelle 1, un rotor 2 de soufflante, ainsi qu'une veine primaire 3, définie dans un carter 5.

On a également représenté sur la figure 1 un carter intercompresseur 8 de la turbomachine, un carter interturbine 9, ainsi qu'un carter d'échappement 10.

La nacelle 1 est compacte et en particulier de longueur réduite. Notamment, elle n'intègre pas d'entrée d'air ou de tuyère secondaire en amont ou en aval de la soufflante.

Elle n'intègre pas non plus de mécanisme d'inversion de poussée.

Elle a pour fonctions principales d'assurer le carénage aérodynamique de la turbomachine et la rétention des aubes/pales de la soufflante et est uniquement dimensionnée à cet effet.

Un redresseur 4 est interposé entre la nacelle 1 et le carter 5 et permet de tenir ladite nacelle 1.

Dans un mode de réalisation possible, une partie de la nacelle 1 peut être rendue commune avec une surface déjà existante sur l'aéronef, comme par exemple l'intrados de la voilure.

Les pales du rotor 2 de la soufflante sont des pales 6 à calage variable (mécanisme 6a).

Le calage des pales 6 peut en particulier être commandé pour piloter la soufflante en fonctionnement. Le très faible rapport de pression de celle-ci induit en effet des variations des paramètres de cycle entre les conditions sol et vol d'une ampleur inhabituelle, en particulier en ce qui concerne les températures de fonctionnement turbine HP et les taux de détente des tuyères.

La commande du calage des pales permet de s'adapter à ces écarts de conditions de fonctionnement.

Egalement, elle est utilisée pour assurer le freinage de l'avion ou contribuer à celui-ci.

Le diamètre D3 du rotor 2 de la soufflante est important : supérieur à 82 pouces (2,08 mètres), et préférentiellement entre 90 (2,29 mètres) et 150 pouces (3,81 mètres).

Le rapport de pression de la soufflante (ratio FPR ou Fan Pressure Ratio selon la terminologie anglosaxonne) est faible : compris entre 1.10 et 1.35.

Compte tenu de ce dimensionnement, la vitesse de rotation du rotor 2 est faible.

On prévoit par conséquent pour l'entrainement de l'arbre A de turbine basse pression un réducteur 7.

Ce réducteur 7 permet un régime de la turbine basse pression élevé : entre 3,5 et 8 fois le régime du rotor 2 et de préférence entre 5 et 6 fois le régime de vitesse de celui-ci. Le rapport de réduction et le couple à transmettre définissent l'encombrement du réducteur. Ici le réducteur 7 est de type épicycloïdal et donc son rapport de réduction est défini par : 1+ (le nombre de dents de la couronne / le nombre de dents du planétaire central). Le couple à transmettre définit la taille minimale des dents et le diamètre minimal du planétaire central or ici la puissance du réducteur doit être entre 10 et 40 MW. Le diamètre primitif de la couronne D4 est donc complexe à intégrer pour un tel rapport de réduction et est compris entre 0,15 et 0,35 fois le diamètre de la soufflante.

Le diamètre D3 de la soufflante est déterminé de façon classique, par projection de la composante radiale en tête d'une aube 6 de soufflante, sur une droite radiale passant par le bord d'attaque de l'aube, au niveau du pied de celle-ci.

Le rapport de moyeu est défini comme le rapport entre le rayon interne en pied d'aube 6 de soufflante, mesuré au bord d'attaque de l'aubage (à son calage de dessin, dans le cas où l'aubage possède un calage variable), et le rayon externe du bord d'attaque de l'aube 6 projeté sur la même droite. Pour garantir un bon rendement de la turbomachine, on restreint au maximum le rapport de moyeu, on a donc un diamètre du moyeu compris entre 0,25 et 0,35 le diamètre de la soufflante.

Notamment, le rayon en pied de soufflante peut être compris entre 300 et 600 mm.

Pour intégrer un réducteur avec un fort taux de réduction tout en conservant un rapport de moyeu le plus petit possible, sans nuire aux caractéristiques aérodynamiques de la veine primaire 3 le carter entourant le réducteur (carter15) comporte une excroissance limitée. Notamment, le rapport entre le diamètre externe (diamètre D2 du carter 15 du réducteur 7) et le diamètre D1 du moyeu 16 de soufflante est supérieur à 1 (D2>D1) et compris entre 1 et 1.04.

Un tel rapport permet à la fois la forme aérodynamique souhaitée pour la veine primaire 3 et l'intégration des servitudes du réducteur (évacuation de l'huile, par exemple) et de la soufflante (système de changement de pas), tout en conservant un rapport de moyeu le plus faible possible. Le carter d'entrée dans lequel s'intègre le réducteur est particulièrement encombré car il doit supporter le réducteur, reprendre la poussée axiale générée par la soufflante par l'intermédiaire du palier à bille et supporter l'arbre A de turbine basse pression.

Par ailleurs, la puissance d'entrée du réducteur est compris entre 10 et 40 MW (au décollage (@ T/O ou « Take -Off » selon la terminologie anglosaxonne - altitude 0, Mach compris entre 0.15 et 0.28)).

Le système propulsif ainsi constitué répond aux objectifs suivants :
- maximisation du rendement propulsif grâce à la soufflante à très faible rapport de pression ;
- compétitivité en termes de consommation de carburant pour des classes de poussée et de vitesse de vol d'applications moyen-courrier et plus grosses (poussée > 15 000 lbf - soit 66723,324 newtons - en condition décollage 0 m / vitesse nulle / conditions ISA ; 0.65 < Mach de vol croisière < 0.9).

Le carénage (nacelle 1) permet une trainée minimale et est peu pénalisant en masse.

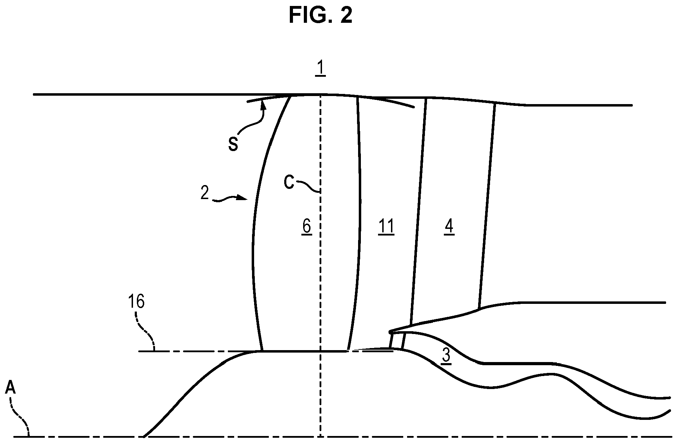

La configuration de pale à calage variable 6 illustrée sur la figure 2 est particulièrement intéressante, notamment pour réaliser la fonction inversion de poussée.

Dans cette configuration, la veine 11 définie entre le carénage 1 et le moyeu 16 est sensiblement cylindrique en pied de pale, c'est-à-dire au niveau du moyeu 16, de façon à limiter la génération de marche dans la veine tout en évitant des formes complexes d'aubes.

Plus particulièrement, la pente du moyeu 16 en pied de pale (ligne discontinue de la figure 2) fait un angle nul ou inférieur à 5° par rapport à l'axe de l'arbre A de turbine basse pression de la turbomachine T.

Egalement, les pales 6 présentent en tête de pale une forme générale sphérique ou sensiblement sphérique (de légères différences de rayon en tête de pale pouvant exister entre le bord d'attaque et le bord de fuite). Cette forme générale sphérique est elle-même reçue dans un renfoncement annulaire sphérique ménagé sur la paroi du carénage 1 qui contribue à définir la veine 11.

On a représenté sur la figure 2 un arc de sphère S correspondant à cette forme générale sphérique en tête de pale, ainsi qu'au renfoncement sphérique sur la paroi du carénage 1. Cet arc de sphère S est centré sur l'intersection entre l'axe de l'arbre A de turbine basse pression de la turbomachine et l'axe de calage d'une aube (axe C sur la figure 2). Le rayon de cet arc de sphère S correspond au plus grand rayon du rotor de la soufflante en tête d'aube.

La découpe sphérique en tête de pale permet d'éviter les contacts en tête de pale quel que soit le calage et d'assurer le jeu minimum avec la veine sphérique quel que soit l'orientation de calage de la pale 6. La tête de pale tourne en effet alors parfaitement dans le renfoncement annulaire sphérique qui la reçoit sur la paroi du carénage 1, sans qu'il y ait de blocage ou de création d'un jeu important.

De cette façon, les pertes de rendement sont minimisées.

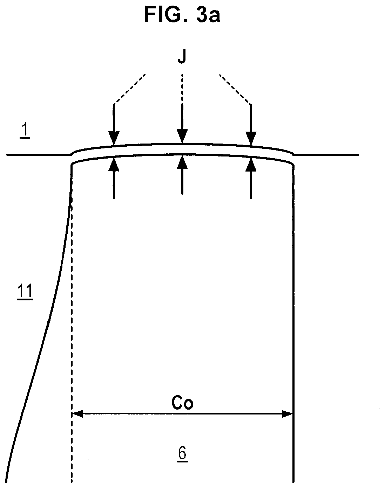

Le jeu J entre une tête de pale et la paroi du carénage 1 a été illustré sur la figure 3a.

Ce jeu prévu entre les pales 6 et le carénage 1 doit permettre d'absorber les variations de dimensions des pales en fonctionnement.

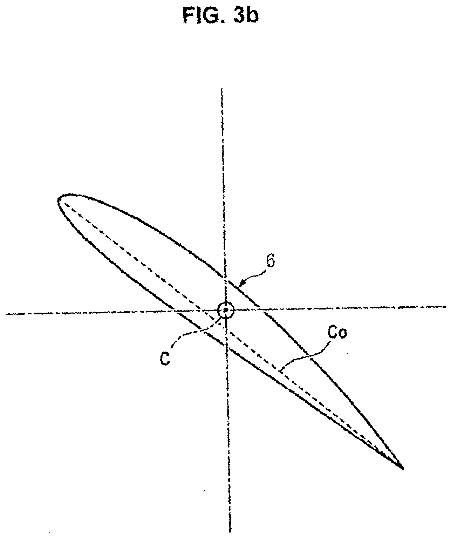

Le jeu moyen est inférieur à 0,35% de la corde en tête (double flèche Co sur les figures 3a et 3b) lorsque le moteur approche son régime maximal au sol (Red Line sol). Il peut aller jusqu'à 0,65% de cette corde en vol au régime de croisière.

On rappelle ici que la corde correspond à la longueur du profil, c'est-à-dire la distance la plus courte entre le bord d'attaque et le bord de fuite (figure 3b). Pour la corde en tête, c'est la distance Co entre l'extrémité en tête du bord d'attaque et l'extrémité en tête du bord de fuite (figure 3a).

Par ailleurs, le jeu moyen doit également permettre le démontage des pales 6 et leur sortie par rapport au moteur, par exemple une fois la cale de maintien en pied de pale enlevée.

On sait en effet que pour le maintien des aubes de soufflante, on prévoit habituellement pour ces dernières, à leur extrémité interne, un pied engagé axialement dans les alvéoles du disque de soufflante et retenu radialement par les dents du disque. Une cale est intercalée entre chaque pied d'aube et le fond d'alvéole correspondant. Des exemples de montage/démontage d'aubes sur un disque de soufflante est par exemple décrit dans la demande FR3034130.

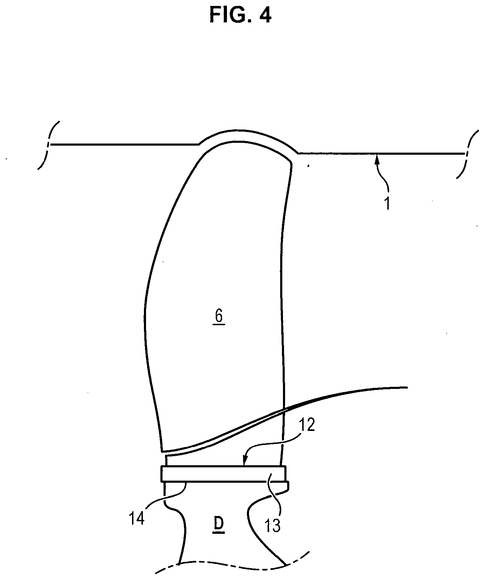

Un exemple de cale est illustré sur la figure 4 sur laquelle on a représenté une aube 6, dont le pied 12 est engagé axialement dans une alvéole 13 de disque de rotor D. Une cale 14 est agencée entre le fond de l'alvéole 13 et le pied d'aube 12.

Les faces radialement externes des cales 14 des aubes épousent les pieds d'aube 12 tandis que les faces radialement internes desdites cales 14 épousent les fonds des alvéoles 13. Ces cales 14 sont relativement plates et s'étendent sur toute la longueur des fonds d'alvéole. Une cale est ainsi intercalée entre chaque pied d'aube et le fond d'alvéole correspondant, à des fins de maintien et de prévention d'une usure prématurée.

Le jeu J (figure 3a) est quant à lui prévu pour permettre le montage/démontage d'une pale 6.

A cet effet, on s'assure que la différence de hauteur entre le rayon au bord d'attaque en tête de pale et le rayon maximale en tête de pale au niveau de l'axe de calage C) soit inférieure à la somme de l'espace du jeu en tête de pale (jeu entre d'une part la tête de pale et la paroi du carénage 1 qui contribue à définir la veine 11) et d'autre part la hauteur de cale sous le pied de l'aube.

Egalement, l'axe de calage C peut ne pas être exactement perpendiculaire à l'axe de l'arbre A de turbine basse pression, mais être légèrement incliné vers l'amont ou vers l'aval.

## Revendications

1. Turbomachine (T) comportant :
- une soufflante carénée,
- un arbre (A) de turbine basse pression,
- un réducteur (7) logé dans un carter (15) du réducteur (7) entre la soufflante et l'arbre (A) de turbine basse pression, le réducteur (7) étant de type épicycloïdal et comprenant une couronne,
- un rotor (2) de soufflante alimentant en flux d'air une veine primaire (3) et une veine secondaire et comportant un moyeu (16) ayant un diamètre (D1) de moyeu,
- un compresseur basse pression distinct de la soufflante, le réducteur étant interposé entre le rotor de soufflante et l'arbre (A) de turbine basse pression,
dans lequel :
- le diamètre (D3) du rotor (2) de soufflante est supérieur à 82 pouces (2,08 mètres),
- le rapport de pression de la soufflante est compris entre 1.10 et 1.35,
- le carter (15) du réducteur (7) est de diamètre externe (D2) supérieur au diamètre (D1) du moyeu (16),
- le diamètre primitif (D4) de la couronne du réducteur (7) est compris entre 0,15 et 0,35 fois le diamètre du rotor (2) de la soufflante, **caractérisé en ce que** le rapport entre le diamètre externe (D2) et le diamètre (D1) du moyeu (16) étant compris entre 1 et 1.04.

2. Turbomachine (T) selon la revendication 1, **caractérisée en ce que** le diamètre du rotor (2) de soufflante est compris entre 90 pouces (2,29 mètres) et 150 pouces (3,81 mètres).

3. Turbomachine (T) selon l'une des revendications précédentes, **caractérisée en ce qu'**elle comporte une nacelle qui est un carénage de protection entourant le rotor (2) de soufflante, ledit carénage présentant une longueur limitée audit rotor (2) de soufflante.

4. Turbomachine (T) selon l'une des revendications précédentes, **caractérisée en ce que** les pales (6) du rotor (2) de soufflante sont du type à calage variable.

5. Turbomachine (T) selon l'une des revendications précédentes, **caractérisée en ce que** le diamètre (D1) de moyeu est compris entre 0,25 et 0,35 fois le diamètre du rotor (2) de soufflante.

6. Turbomachine (T) selon l'une des revendications précédentes, **caractérisée en ce que** le taux de réduction du réducteur (7) est compris entre 3,5 et 8.

7. Turbomachine (T) selon l'une des revendications précédentes, **caractérisée en ce que** le taux de réduction du réducteur (7) est de l'ordre de 5 ou 6.

8. Turbomachine (T) selon la revendication 4, lorsqu'elle dépend de la revendication 3, **caractérisée en ce qu'**une veine définie entre le carénage (1) et le moyeu (16) est sensiblement cylindrique en pied de pale, l'angle de la pente du moyeu (16) en pied de pale étant nul ou inférieur à 5°.

9. Turbomachine (T) selon la revendication 4 ou la revendication 8, lorsque la revendication 4 dépend de la revendication 3, **caractérisée en ce que** le carénage présente un renfoncement annulaire sphérique en tête de pale, les têtes des pales (6) étant de forme générale complémentaire.

10. Turbomachine (T) selon la revendication 9, **caractérisée en ce que** le renfoncement annulaire sphérique est conçu de sorte à ce que, lorsque la turbomachine est à son régime maximal au sol, le jeu moyen entre la paroi du renfoncement annulaire sphérique et une tête de pale adimensionnée par la corde en tête de pale est inférieur à 0,35%.

11. Turbomachine (T) selon l'une des revendications 9 ou 10, **caractérisée en ce que** le renfoncement annulaire sphérique est conçu de sorte à ce que, lorsque la turbomachine est en régime de croisière de la turbomachine, le jeu moyen entre la paroi du renfoncement annulaire sphérique et une tête de pale adimensionné par la corde en tête de pale est inférieur à 0,65%.

12. Aéronef comportant une turbomachine selon l'une des revendications précédentes.

## Patentansprüche

1. Turbomaschine (T) bestehend aus :
- einem verkleideten Gebläse,
- einer Welle (A) einer Niederdruckturbine,
- einem Untersetzungsgetriebe (7), das in einem Gehäuse (15) des Untersetzungsgetriebes (7) zwischen dem Gebläse und der Welle (A) der Niederdruckturbine untergebracht ist, wobei das Untersetzungsgetriebe (7) vom Typ Epizykloid ist und einen Kranz umfasst,
- einem Gebläserotor (2), der einen Primärstrom (3) und einen Sekundärstrom mit einem Luftstrom versorgt und eine Nabe (16) mit einem Nabendurchmesser (D1) aufweist,
- einem vom Gebläse getrennten Niederdruckkompressor, wobei das Getriebe zwischen dem Gebläserotor und der Welle (A) der Niederdruckturbine angeordnet ist,
in dem :
- der Durchmesser (D3) des Gebläserotors (2) größer als 82 Zoll (2,08 Meter) ist,
- das Druckverhältnis des Gebläses zwischen 1,10 und 1,35 liegt,
- das Gehäuse (15) des Getriebes (7) einen Außendurchmesser (D2) hat, der größer ist als der Durchmesser (D1) der Nabe (16),
- der Teilkreisdurchmesser (D4) des Zahnkranzes des Getriebes (7) zwischen dem 0,15- und 0,35-fachen des Durchmessers des Gebläserotors (2) liegt,
**dadurch gekennzeichnet, dass** das Verhältnis zwischen dem Außendurchmesser (D2) und dem Durchmesser (D1) der Nabe (16) zwischen 1 und 1,04 liegt.

2. Turbomaschine (T) nach Anspruch 1, **dadurch gekennzeichnet, dass** der Durchmesser des Gebläserotors (2) zwischen 90 Zoll (2,29 Meter) und 150 Zoll (3,81 Meter) liegt.

3. Turbomaschine (T) nach einem der vorhergehenden Ansprüche, **dadurch gekennzeichnet, dass** sie eine Gondel aufweist, die eine Schutzverkleidung ist, die den Gebläserotor (2) umgibt, wobei die Verkleidung eine Länge aufweist, die auf den Gebläserotor (2) begrenzt ist.

4. Turbomaschine (T) nach einem der vorhergehenden Ansprüche, **dadurch gekennzeichnet, dass** die Schaufeln (6) des Gebläserotors (2) vom Typ mit verstellbarer Verstellung sind.

5. Turbomaschine (T) nach einem der vorhergehenden Ansprüche, **dadurch gekennzeichnet, dass** der Nabendurchmesser (D1) zwischen dem 0,25- und 0,35-fachen des Durchmessers des Gebläserotors (2) liegt.

6. Turbomaschine (T) nach einem der vorhergehenden Ansprüche, **dadurch gekennzeichnet, dass** das Untersetzungsverhältnis des Getriebes (7) zwischen 3,5 und 8 liegt.

7. Turbomaschine (T) nach einem der vorhergehenden Ansprüche, **dadurch gekennzeichnet, dass** das Untersetzungsverhältnis des Getriebes (7) in der Größenordnung von 5 oder 6 liegt.

8. Turbomaschine (T) nach Anspruch 4, wenn sie von Anspruch 3 abhängt, **dadurch gekennzeichnet, dass** eine zwischen der Verkleidung (1) und der Nabe (16) definierte Ader am Schaufelfuß im Wesentlichen zylindrisch ist, wobei der Winkel der Schräge der Nabe (16) am Schaufelfuß Null oder weniger als 5° beträgt.

9. Turbomaschine (T) nach Anspruch 4 oder Anspruch 8, wenn Anspruch 4 von Anspruch 3 abhängt, **dadurch gekennzeichnet, dass** die Verkleidung eine kugelförmige ringförmige Vertiefung am Schaufelkopf aufweist, wobei die Schaufelköpfe (6) allgemein komplementär geformt sind.

10. Turbomaschine (T) nach Anspruch 9, **dadurch gekennzeichnet, dass** die kugelförmige ringförmige Vertiefung so gestaltet ist, dass, wenn die Turbomaschine ihre maximale Drehzahl am Boden hat, das mittlere Spiel zwischen der Wand der kugelförmigen ringförmigen Vertiefung und einem durch die Sehne an der Schaufelspitze skalierten Schaufelkopf weniger als 0,35% beträgt.

11. Turbomaschine (T) nach einem der Ansprüche 9 oder 10, **dadurch gekennzeichnet, dass** die kugelförmige ringförmige Vertiefung so gestaltet ist, dass, wenn sich die Turbomaschine im Reiseflugzustand der Turbomaschine befindet, das mittlere Spiel zwischen der Wand der kugelförmigen ringförmigen Vertiefung und einem Schaufelkopf, das durch die Sehne am Schaufelkopf skaliert wird, weniger als 0,65% beträgt.

12. Luftfahrzeug mit einer Turbomaschine nach einem der vorhergehenden Ansprüche.

## Claims

1. A turbomachine (T) including:
- a ducted fan,
- a low pressure turbine shaft (A),
- a reduction gearbox (7) housed in a casing (15) of the reduction gearbox (7) between the fan and the low-pressure turbine shaft (A), the reduction gearbox (7) being of epicyclic type and including a ring,
- a fan rotor (2) supplying air flow to a primary stream (3) and a secondary stream and including a hub having a hub diameter (D1),
- a low pressure compressor distinct from the fan, the reduction gearbox being interposed between the fan rotor and the low-pressure turbine shaft (A),
wherein,
- the diameter (D3) of the fan rotor (2) is greater than 82 inches (2.08 meters),
- the pressure ratio of the fan ranges between 1.10 and 1.35,
- the casing (15) of the reduction gearbox (7) has an external diameter (D2) greater than the diameter (D1) of the hub (16),
- the pitch diameter (D4) of the ring of the reduction gearbox (7) ranges between 0.15 and 0.35 times the diameter of the fan rotor (2)
**characterized in that** the ratio between the external diameter (D2) and the diameter (D1) of the hub (16) ranging from 1 to 1,04.

2. The turbomachine (T) according to claim 1, **characterized in that** the diameter of the fan rotor (2) ranges between 90 inches (2.29 meters) and 150 inches (3.81 meters).

3. The turbomachine (T) according to any of the preceding claims, **characterized in that** it includes a nacelle which is a protective fairing surrounding the fan rotor (2), said fairing having a limited length with respect to said fan rotor (2).

4. The turbomachine (T) according to any of the preceding claims, **characterized in that** the fan rotor (2) blades (6) are of variable setting type.

5. The turbomachine (T) according to any of the preceding claims, **characterized in that** the hub diameter (D1) ranges between 0.25 and 0.35 times the diameter of the fan rotor (2).

6. The turbomachine (T) according to any of the preceding claims, **characterized in that** the reduction rate of the reduction gearbox (7) ranges between 3.5 and 8.

7. The turbomachine (T) according to any of the preceding claims, **characterized in that** the reduction rate of the reduction gearbox (7) is of the order of 5 or 6.

8. The turbomachine (T) according to claim 4, when depending on claim 3, **characterized in that** a stream defined between the fairing (1) and the hub (16) is substantially cylindrical at the blade root, the angle of glide of the hub (16) at the blade root being null or lower than 5°.

9. The turbomachine (T) according to claim 4 or claim 8, when claim 4 depends on claim 3, **characterized in that** the fairing exhibits a spherical annular reinforcement at the blade tip, the blade tips (6) being of a general complementary form.

10. The turbomachine (T) according to claim 9, **characterized in that** the spherical annular reinforcement is designed such that, when the turbomachine is at its maximum ground regime, the mean clearance between the spherical annular reinforcement wall and a blade tip made dimensionless by the chord at the tip of the blading is lower than 0.35%.

11. The turbomachine (T) according to any of claims 9 or 10, **characterized in that** the spherical annular reinforcement is designed such that, when the turbomachine is at its cruise regime, the mean clearance between the spherical annular reinforcement wall and a blade tip made dimensionless by the chord at the tip of the blading is lower than 0.65%.

12. An aircraft including a turbomachine according to any of the preceding claims.
